# EUROPÄISCHE PATENTSCHRIFT

(11) **EP 1 193 913 B1**
(45) Veröffentlichungstag und Bekanntmachung des Hinweises auf die Patenterteilung: **29.07.2009**
(21) Anmeldenummer: 01119970.0
(22) Anmeldetag: 18.08.2001
(51) Int. Cl.: H04L 12/40, H04L 12/413, B60R 16/02

(54) **Verfahren und Vorrichtung zur Steuerung von Zündung oder Einspritzung in einem Kraftfahrzeug**
Method and apparatus for controlling of ignition or injection in a vehicle
Procédé et dispositif de contrôle de allumage ou injection dans un véhicule

(30) Priorität: 29.09.2000 DE 10048808
(43) Veröffentlichungstag der Anmeldung: 03.04.2002
(73) Patentinhaber: ROBERT BOSCH GMBH, 70442 Stuttgart (DE)
(72) Erfinder: Gross, Helmut, Dr., 70806 Kornwestheim (DE); Mencher, Bernhard, 71701 Schwieberdingen (DE); Baeuerle, Peter, 71636 Ludwigsburg (DE)

(56) Entgegenhaltungen:
- US-A- 5 369 581
- US-A- 5 748 923
- US-A- 6 111 888

## Beschreibung

### Stand der Technik

Die Erfindung betrifft ein Verfahren und eine Vorrichtung zur Steuerung von Zündung oder Einspritzung in einem Kraftfahrzeug insbesondere bei einem Fahrzeug, wobei wenigstens ein Sensor mit wenigstens einer Steucreinheit zur Steuerung von Zündung oder Einspritzung in einem Kraftfahrzeug verbunden ist und Sensorinformationen zum Motorsteuergerät übertragen werden gemäß den Oberbegriffen der unabhängigen Ansprüche.

Fahrzeugsensoren, insbesondere die Sensoren des Abgasstranges, wie z.B. Lambdasensoren und Heißfilmluftmassenmesscr sind heute in der Regel konventionell über einen kabelbaum mit einem Steuergerät, insbesondere dem Motorsteuergerät verbunden. Dabei stehen für die Signale und Spannungsversorgungen entsprechende Hardwareleitungen zur Verfügung.

Allerdings wird in dem Artikel von Heintz und Zabler "Einsatzmöglichkciten und Zukunftschancen intelligenter Sensoren im Kraftfahrzeug" aus BOSCH Technische Berichte 1990, Heft 52, Seite 30 bis 41, was der deutschen Fassung des Vortrags bei der SAE-Conference in Detroit im März 1989 entspricht, busfähige Smart Sensorik gezeigl. Dabei werden bei Fahrzeugkonzepten Mchrfachmessungen von Größen durchgeführt, die von elektronischen Systemen im Kraftfahrzeug benötigt werden. Durch Zufügen elektronischer Komponenten werden die entsprechenden Sensoren mit einer Signalvorverarbeitung versehen und busfähig, d. h. mehrfach nutzbar gemacht. Dadurch entsteht ein Buskonzept, bei dem intelligente Sensoren mit Elektronik vor Ort mit wenigstens einem Steuergerät in Verbindung stehen. Beispiele für Datenübertragungen zwischen Steuergeräten und Sensoren über Bussysteme sind in den US578923 und US6111888 zu finden.

Um dabei Sensoren mit einem Steuergerät mit Hilfe eines Bussystems, insbesondere eines CAN-Bus-Systems zu verkoppeln, müssen, insbesondere bei echtzeitkritischen Anwendungen, z. B. bei Sensoren des Abgasstranges in Verbindung mit dem Motorsteuergerät, vielfältige Zeitbedingungen eingehalten werden. Eine solche optimale bzw. optimierte Synchronisation der Sensorik mit: dem Steuergerät bzw. der Steuereinheit ist Gegenstand dieser Erfindung.

### Vorteile der Erfindung

Die Erfindung geht aus von einem Verfahren zur Steuerung von Zündung und/oder Einspritzung läuf, insbesondere bei einem Fahrzeug, wobei wenigstens ein Sensor mit einer Verbindungseinheit über ein Bussystem mit wenigstens einer Steuereinheit (im Folgenden insbesondere ein Motorsteuergerät) zur Steuerung von Zündung und/oder Einspritzung, welche ebenfalls eine Verbindungseinheit aufweist, verbunden ist und Sensorinformationen zur Steuereinheit übertragen werden, wobei die Steuereinheit die Sensorinformationen zu vorgebbaren Synchronisationspunkten einliest und/oder verarbeitet, wobei vorteilhafter Weise die Stcuereinheit ein Triggersignal über das Bussystem an den Sensor derart mit einem Vorhalt übermittelt, dass die Sensorinformationen zum Synchronisationspunkt für die Steuereinheit einlesbar und/oder verarbeitbar vorliegen. Zweckmäßiger Weise wird damit als Grundvoraussetzung zur Darstellung eines Sensorbusses, insbesondere für den Abgasstrang, eine Synchronisation von Sensoren und Steuereinheit so realisiert, dass die Sensorinformationen dann zur Steuereinheit übertragen werden bzw. bei der Steuereinheit vorliegen, wenn diese die Steuerinformationen auch gerade einlesen und/oder verarbeiten soll Durch Verwendung eines Triggersignals über das Bussystem, kann der durch die Sensoranbindung reduzierte Verkabelungsaufwand noch weiter reduziert werden, da vorteilhafter Weise auf eine zusätzliche Hardwarc-Triggerleitung verzichtet werden kann, was großes Kosteneinsparpotential in sich birgt.

Beinhaltet dabei der Sensor zweckmäßiger Weise eine Verarbeitungseinheit, welche eine Vorverarbeitung der Sensorinformationen vornimmt, wird vorteilhafter Weise der Vorhalt entsprechend der zur Vorverarbeitung der Sensorinformationen benötigten Zeit vorgegeben und/oder angepasst.

Durch den erfindungsgemäßen Vorhalt des Triggersignals zum Synchronisationspunkt kann vorteilhafter Weise eine hohe Aktualität der Sensorinformationen gewährleistet werden.

Dabei kann der Vorhalt erfindungsgemäß variabel, abhängig von wenigstens einer wenigstens einem Betriebsablauf entstammenden Betriebsgröße, insbesondere abhängig von der Motordrehzahl, vorgegeben und/oder angepasst werden. Dabei wird also vorteilhafter Weise der Dynamikeinfluss bestimmter Betriebsabsabläufen zuordenbarer Betriebsgrößen, insbesondere der Motordrehzahl, berücksichtigt.

Vorteithafter Weise wird der Vorhalt abhängig von wenigstens einem der folgenden Einflüsse vorgegeben und/oder angepasst:
- eine Übertragungszeit des Triggersignals von der Verarbeitungseinheit der Steuereinheit zu deren Verbindungseinheit mit dem Bussystem;
- eine Übertragungs- bzw. Wartezeit bis zur Beendigung einer bereits über das Bussystem übertragenen Busbotschaft, bis das Triggersignal oder die Sensorinformationen übertragen werden können;
- eine Übertragungszeit des Triggersignals selbst über das Bussystem;
- eine Übertragungszeit des Triggersignals von der Verbindungseinheit des Sensors zur Verarbeitungseinheit des Sensors;
- eine Verarbeitungszeit bis zum Beenden der Verarbeitung der Sensorinformationen durch die Verarbeitungseinheit im Sensor und/oder
- eine Übertragungszeit der Sensorinformationen vom Sensor zur Steuereinheit, welche die Übertragungszeit von der Verarbeitungseinheit zur Verbindungseinheit des Sensors und die Übertragungszeit von der Verbindungseinheit des Sensors über das Bussystem bis zur Verbindungseinheit der Steuereinheit sowie die Übertragungszeit von der Verbindungseinheit der Steuereinheit bis zur Verarbeitungseinheit der Steuereinheit einschließt.

Vorteilhafter Weise wird der Vorhalt in Form einer Zeitgröße als Zeitvorhalt oder in einer vorteilhaften Ausgestaltung in Form einer Winkelgröße als Winkelvorhalt bestimmt. Dabei können ein Zeitvorhalt bzw. ein Winkelvorhalt ineinander umgerechnet werden. Diese Umrechnung des Zeitvorhaltes in einen Winkelvorhalt unter Berücksichtigung der Winkelgeschwindigkeit hat den Vorteil, dass die Betriebsgröße, insbesondere die Motordrehzahl nur zum Synchronisationspunkt berechnet wird, da der aktuelle Winkel, insbesondere der Kurbelwellenwinkel, z. B. bei einem Motorsteuergerät vorliegt und damit das Triggersignal abhängig von dieser Winkelinformation übermittelt werden kann. Durch die dadurch mögliche Beschränkung der Berechnung der Betriebsgröße, insbesondere der Motordrehzahl auf die Synchronisationspunkte kann erheblich Rechenleistung und Rechenzeit in der Steuereinheit eingespart werden.

Um dabei die Aktualität des Softwaretriggersignals sicherzustellen, wird dem Softwaretriggersignal eine hohe, insbesondere die höchste Priorität im Rahmen der Übertragung über das Bussystem zugeordnet. Vorteilhafter Weise werden auch die Sensorinformationen mit hoher Priorität übertragen.

Bei einer vorteilhaften Ausgestaltung werden die Sensorinformationen und das Triggersignal leitungslos zwischen der Verbindungseinheit des wenigstens einen Sensors und der Verbindungseinheit der Steuereinheit übertragen,
wobei in dieser vorteilhaften Ausgestaltung die Verbindungseinheiten als Sender- und Empfängereinheiten eines leitungslosen Bussystems, insbesondere eines Funkbussystems ausgebildet sind. Dadurch kann zweckmäßiger Weise eine noch größere Einsparung an Leitungsverbindungen erfolgen.

Weitere Vorteile und vorteilhafte Ausgestaltungen sind Gegenstand der Beschreibung sowie der Ansprüche.

### Zeichnung

Die Erfindung wird im Weiteren anhand der in der Zeichnung dargestellten Figuren offenbart.

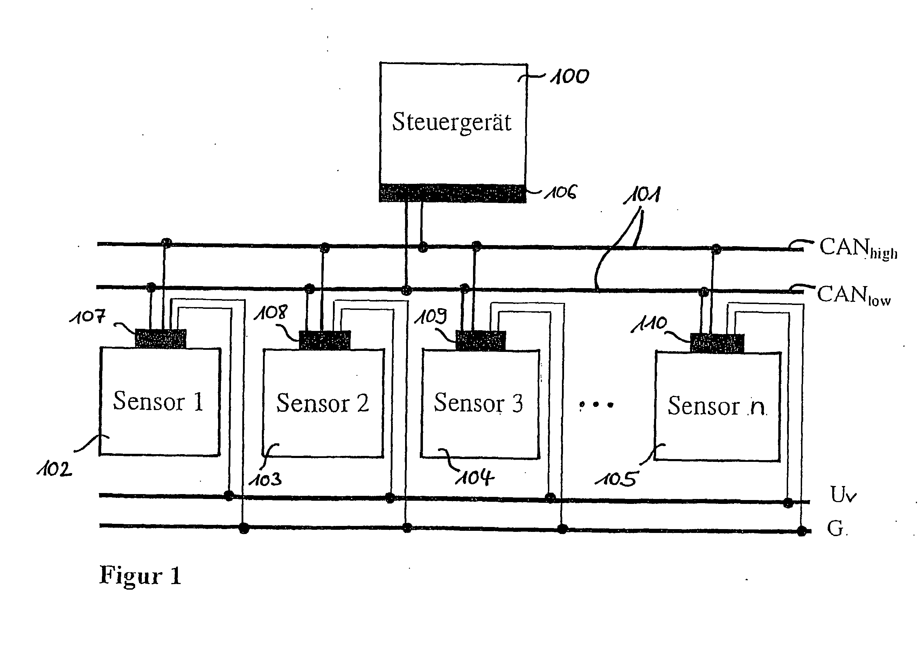

Dabei zeigt Figur 1 ein Sensorbussystem mit Sensoren 1 bis n und einem Steuergerät bzw. einer Steuereinheit, welche mittels eines leitungsgebundenen Bussystems verbunden sind.

Figur 2 zeigt in einem Zeitdiagramm den Informationsaustausch zwischen Steuereinheit und Sensor, insbesondere Lambdasensorik, mit Zeittoleranzen, welche Eingang in den Vorhalt finden.

Figur 3 zeigt den Triggersignal- bzw. Sensorinformationsaustausch mit erfindungsgemäßem Vorhalt, insbesondere am Beispiel eines Heißfilmluftmassenmessers (HFM).

In Figur 4 ist der Dynamikeinfluss der Betriebsgröße Motordrehzahl auf den Zeitvorhalt dargestellt.

Figur 5 zeigt die Umrechnung zwischen einem Zeitvorhalt und einem Winkelvorhalt unter Berücksichtigung der Dynamikeinflüsse.

Figur 6, bestehend aus Figur 6a und 6b zeigt zwei vorteilhafte Ausgestaltungen der erfindungsgemäßen Anordnung bei leitungsloser Signal- bzw. Informationsübertragung zwischen Steuereinheit und Sensorik.

### Beschreibung der Ausführungsbeispiele

Figur 1 zeigt eine Sensorbusanordnung mit einer Steuereinheit 100, insbesondere einem Motorsteuergerät, und einem Bussystem 101, insbesondere einem CAN-Bus. Die beiden im Rahmen des Bussystems 101 dargestellten Leitungen dienen der Darstellung der High- bzw. Low-Information im Rahmen einer digitalen Datenübertragung. Die Steuereinheit ist über Verbindungseinheit 106 mit dem Bussystem 101 verbunden. Ebenso sind Sensoren 102 bis 105 mittels der Verbindungseinheiten 107 bis 110 jeweils mit dem Bussystem 101 verbunden. Dabei ist Sensor 1 beispielsweise ein erster Lambdasensor und Sensor 2 ein zweiter Lambdasensor im Rahmen einer zylinderselektiven Lambdaregelung, wobei die Lambda-Werte für jedes Segment bezogen auf den Kurbelwellenwinkel getrennt ausgewertet und spätestens innerhalb des nächsten Segments an die Motorsteuerung weiterzuleiten sind.

Sensor 3 ist beispielsweise ein Heißfilmluftmassenmesser HFM, dessen Lastsignal rechtzeitig zum Synchronisationspunkt, also einem vorgebbaren Zeitpunkt bzw. Kurbelwellenwinkel, zu dem für jeden Arbeitstakt die Berechnung von Zündung und/oder Einspritzung gestartet wird, am Motorsteuergerät einlesbar und/oder verarbeitbar vorliegen muss, um eben Zündung und/oder die Einspritzung für jeden Zylinder bestimmen zu können.

Weitere Sensorik ist beispielhaft mit Sensor n, 105 dargestellt, welcher z. B. NOx-Sensorik repräsentiert.

Die Sensorik 102 bis 105 ist weiterhin mit der Versorgungsspannung Uv sowie mit Masse G verbunden. Dabei sind die Anforderungen zur Übertragung des HFM-Signals und die Segmentinformationen für die zylinderselektive Lambdaregelung über das Softwaretriggersignal vom Motorsteuergerät an die jeweiligen Sensoren weiterzuleiten. Dabei ist mit Segment der Winkel bzw. die Zeitdauer zwischen zwei Synchronisationspunkten dargestellt. Ein Segment im Rahmen des Kurbelwellenwinkels errechnet sich dabei aus 720° geteilt durch die Zylinderzahl.

Dabei sind die zylinderselektive Lambdaregelung und die Ermittlung des Lastsignals mit Hilfe des Heißfilmluftmassenmessers über ein Segment beispielsweise in der Motorsteuerung realisiert. Um dabei eine kritische Auslastung des Bussystems 101, insbesondere eines CAN-Busses, zu vermeiden, können die Sensorinformationen bereits vor Ort, also in einer Verarbeitungseinheit im Sensor vorausgewertet bzw. vorverarbeitet werden. Diese Vorverarbeitung, beispielsweise eine Mittelwertbildung und die zugehörige Übertragung der Sensorinformationen, insbesondere des Mittelswertes, muss dann so rechtzeitig erfolgen, dass z. B. zum Synchronisationspunkt die Einspritzung und/oder die Zündung für den nächsten Arbeitstakt berechnet werden können.

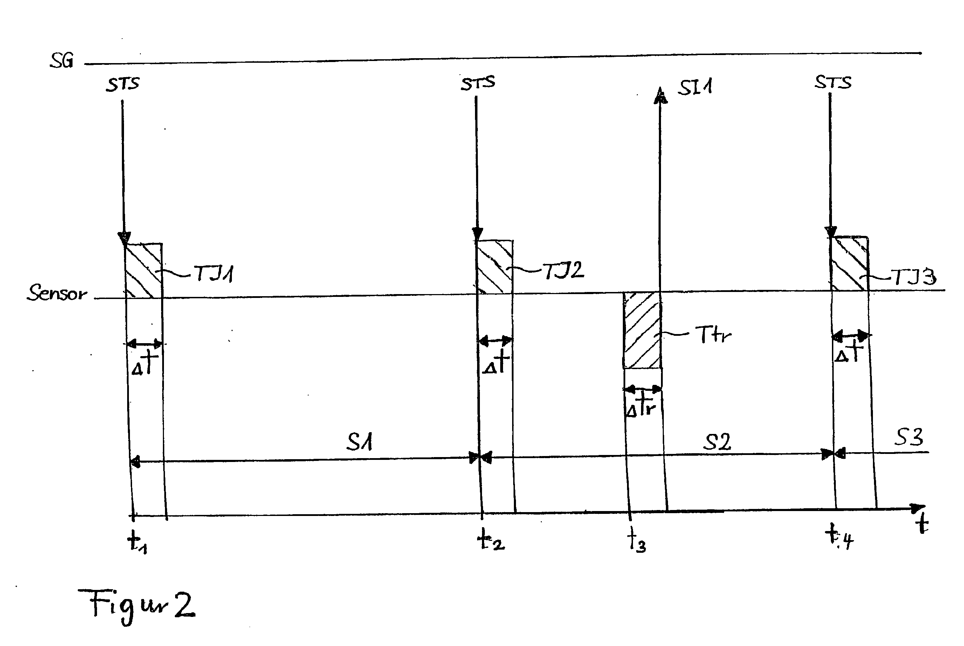

Die Informations- und Signalübertragung ist in Figur 2 im Rahmen eines Sensorbusses mit Berücksichtigung dabei auftretender Toleranzen dargestellt. Mögliche Ursachen bzw. Einflüsse bezüglich dieser Toleranzen werden später genauer erläutert. Die Situation in Figur 2 wird beispielhaft anhand einer zylinderselektiven Lambdaregelung im Rahmen eines Sensorbusses im Abgasstrang erläutert. Für eine zylinderselektive Lambdaregelung sollen die Lambdamesswerte dem jeweiligen Segment S1, S2 bzw. S3 zugeordnet sein, d. h. der Start- und Endpunkt des Messfensters ist durch die Synchronisationspunkte t1, t2 und t4 definiert.

Zur Erfassung der Lambda-Werte sind dabei beispielhaft folgende Varianten möglich:
Pro Segment werden zwei Lambda-Werte gemessen, wobei diese Werte ohne weitere Auswertung an die Steuereinheit, insbesondere das Motorsteuergerät übertragen werden. Andererseits können die Lambda-Werte in einem festen Zeitraster, beispielsweise einer Millisekunde erfasst werden. Bei Verwendung intelligenter oder "smarter" Sensorik, also Sensorik, die eine Verarbeitungseinheit enthält, kann eine Vorverarbeitung bzw. Vorauswertung, beispielsweise eine Mittelwertbildung vor Ort im Sensor erfolgen.

Diese vorverarbeiteten Lambda-Werte, beispielsweise Mittelwerte werden dann insbesondere im Rahmen einer physikalischen Schnittstelle über das Bussystem an die Steuereinheit übertragen. Die physikalische Schnittstelle hat dabei den Vorteil, dass Sensoren insbesondere im Rahmen der später noch dargestellten leitungslosen Übertragen einfach hinzugefügt, aus dem Verbund genommen bzw. ausgetauscht werden können. Bei Verarbeitung der Lambdawerte bzw. Mittelwerte sind wiederum Varianten denkbar, beispielsweise die Mittelwertbildung der gemessenen Lambda-Werte innerhalb der ersten Segmenthälfte des jeweiligen Segmentes und/oder Mittelwertbildungen der gemessenen Lambda-Werte innerhalb der zweiten Segmenthälfte. Diese beiden Mittelwerte, getrennt für erste und zweite Segmenthälfte können dann an die Steuereinheit übertragen werden.

Werden die Synchronisationspunkte als Softwaretriggersignal STS über das Bussystem, z. B. einen CAN-Bus übertragen, so ist ein Jitter bzw. eine Toleranz Δt des Synchronisationspunktes zu berücksichtigen.

Die Übertragung der gemessenen und/oder vorausgewerteten Sensorinformationen SI kann beispielsweise im folgenden Segment, hier in S2 durchgeführt werden. Eine Rückübertragung ist ebenfalls noch im aktuellen Segment, also dem zylinderzugeordneten Segment, in welchem die Messwerte bzw. Sensorinformationen aufgenommen werden, möglich, nachdem der letzte Messwerte aufgenommen ist. Zum Synchronisationspunkt t1 wird ein Softwaretriggersignal STS von der Steuereinheit bzw. dem Motorsteuergerät SG an den Sensor übertragen innerhalb der Toleranz Δt, also dem Fenster TJ1 erfolgt der Start für die Messung durch den Sensor bezüglich Segment S1. Zum Synchronisationspunkt t2 wird erneut ein Softwaretriggersignal STS von der Steuereinheit zum Sensor übermittelt. Im Toleranzfenster TJ2 der Dauer Δt liegt das Ende der Messung für Segment 1, S1 sowie der Start für die Messung für Segment S2. Zum Zeitpunkt t3 erfolgt mit einer Übertragungsdauer von Δtr, also im Fenster Ttr die Rückübertragung insbesondere der vorausgewerteten Messwerte von Segment S1, die Sensorinformationen SI1. Zum Synchronisationspunkt t4 wird erneut ein Softwaretriggersignal STS an den Sensor übermittelt. Im Jitter- bzw. Toleranzfenster TJ3 der Dauer Δt liegt dann das Ende der Messung für Segment S2 sowie der Start der Messung für Segment S3.

Mögliche Ursachen bzw. Einflüsse bezüglich des Jitters, also der Toleranzen TJ1, TJ2 und TJ3 des Softwaretriggers STS sind im Folgenden zusammengestellt. Zunächst muss das Triggersignal STS von der Verarbeitungseinheit (z.B. der CPU) der Steuereinheit an die Verbindungseinheit (insbesondere ein CAN-Controller) weitergeleitet werden. Diese Übertragungszeit des STS als Anforderung von der Verarbeitungseinheit der Steuereinheit zur Verbindungseinheit der Steuereinheit kann stark variieren und sollte vorteilhafter Weise später im Rahmen einer maximalen Übertragungszeit angenommen werden.

Bevor die Synchro-Information, also das Softwaretriggersignal STS über das Bussystem, insbesondere CAN, übertragen werden kann, muss möglicherweise noch die Übertragungsdauer einer bereits in Übertragung befindlichen Botschaft über den Bus abgewartet werden. Es muss also eine Übertragungszeit einer bereits zu übertragenden Busbotschaft, eventuell auch niederer Priorität abgewartet werden. Auch dies ist später zu berücksichtigen. Des Weiteren ist die Übertragungszeit der Softwaretriggerbotschaft STS selbst über das Bussystem zu berücksichtigen. Nachdem das Softwaretriggersignal STS, insbesondere als CAN-Botschaft, an der Verbindungseinheit, insbesondere dem CAN-Controller bzw. CAN-Baustein des Sensors angekommen ist, ist noch eine toleranzbehaftete Zeit vorzusehen, bis die Synchronisationsinformation STS einer möglichen Verarbeitungseinheit im Sensor vorliegt. Es ist also eine Übertragungszeit von der Verbindungseinheit des Sensors zur Verarbeitungseinheit des Sensors ins Kalkül zu ziehen. Diese Einflüsse und Schwankungen bedingen ein gewisses Jitter, also die Schwankung der Kennzeitpunkte des übertragenen Digitalsignals, um einen idealen, meist äquidistanten, also immer zur gleichen Zeit wiederkehrenden Zeitpunkt.

Bei der Rückübertragung ab t3 ist dann die Übertragungszeit der Sensorinformation vom Sensor zur Steuereinheit zu berücksichtigen. Die Verarbeitungszeit bis zur Beendigung der Verarbeitung der Sensorinformationen durch die Verarbeitungseinheit im Sensor speziell im Rahmen eines intelligenten oder Smart-Sensors kann dann entweder vor t3 oder auch noch innerhalb des Fensters Ttr berücksichtigt werden.

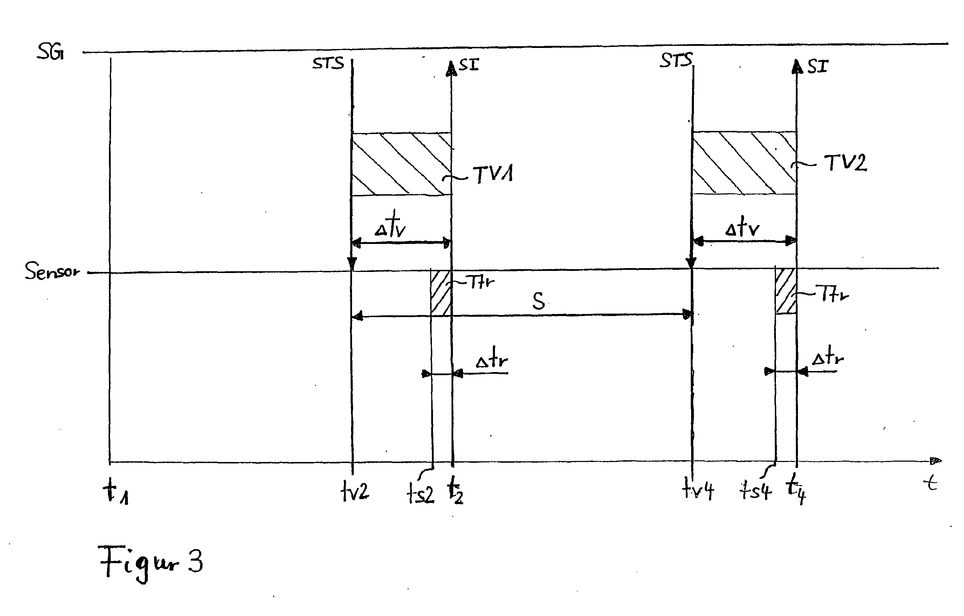

Erfindungsgemäß wird nun ein Vorhalt, insbesondere ein Zeitvorhalt oder ein Winkelvorhalt vorgesehen, um die Sensorinformationen bereits zum Synchronisationspunkt t1, t2, t3 für die Steuereinheit einlesbar bzw. verarbeitbar vorliegen zu haben. Dazu wird in Figur 3 am Beispiel eines Heißfilmluftmassenmessers HFM ein Zeitvorhalt Δtv vorgesehen, der neben den in Figur 2 genannten Toleranzen weitere Übertragungen bzw. Übertragungszeiten berücksichtigt, um das Lastsignal bereits zum Synchronisationspunkt vorliegen zu haben.

Diese Übertragungen sind einmal die Anforderung der Sensorübertragung, softwaremäßig übertragen von der Steuereinheit an den Sensor, beispielsweise über CAN, die Beendigung der Vorauswertung bzw. Vorverarbeitung im Sensor, beispielsweise der Mittelwertbildung der Messwerte aus dem letzten Segment sowie die Rückübertragung der vorausgewerteten Sensorsignale an die Steuereinheit, insbesondere das Motorsteuergerät.

Diese Übertragungszeiten bzw. Verarbeitungszeiten sind stark toleranzbehaftet. Unter Berücksichtigung dieser Vorhaltezeitfenster tv1 und tv2 der Dauer Δtv verschieben sich quasi die Start- und Endpunkte des Segments, hier S im Vergleich zu S2 zu den früheren Vorhaltezeitpunkten tv2 und tv4. Dieses beispielhaft dargestellte Segment für den HFM liegt somit zwischen tv2 und tv4, d. h. die Softwaretriggersignale STS werden zu diesen Zeitpunkten (tv2, tv4) von der Steuereinheit, insbesondere dem Motorsteuergerät SG an den Sensor, insbesondere den Heißfilmluftmassenmesser HFM übertragen. Der vorgebbare Zeitvorhalt Δtv ist dann so vorgesehen, dass innerhalb der Zeitfenster tv1 bzw. tv2 die Rückübertragung der Sensorinformation, insbesondere der vorverarbeiteten Sensorinformation mit dem Übertragungszeitfenster Ttr der Dauer Δtr stattfinden kann. So liegen die aktuellsten Sensorinformationen zum eigentlichen Synchronisationspunkt t2 und t4 einlesbar bzw. verarbeitbar an der Steuereinheit vor, so dass die Berechnungen synchronisiert nur einmal durchgeführt werden müssen und so schon an dieser Stelle Rechenleistung gespart werden kann.

In einer vorteilhaften Ausgestaltung wird für die Wahl des Vorhalts, insbesondere als Winkelvorhalt oder Zeitvorhalt (tv1, tv2) der Dynamikeinfluss bestimmter Betriebsgrößen, insbesondere der Motordrehzahl, also die Dynamik des Motors berücksichtigt. Dies ist beispielsweise der Fall, wenn die Motordrehzahl mit maximaler Last ansteigt oder wenn die Motordrehzahl stark abnimmt.

Dabei sind die Zeitpunkte tv1 und tv2 beispielsweise auf der Winkelebene abzubilden, was später noch erläutert wird.

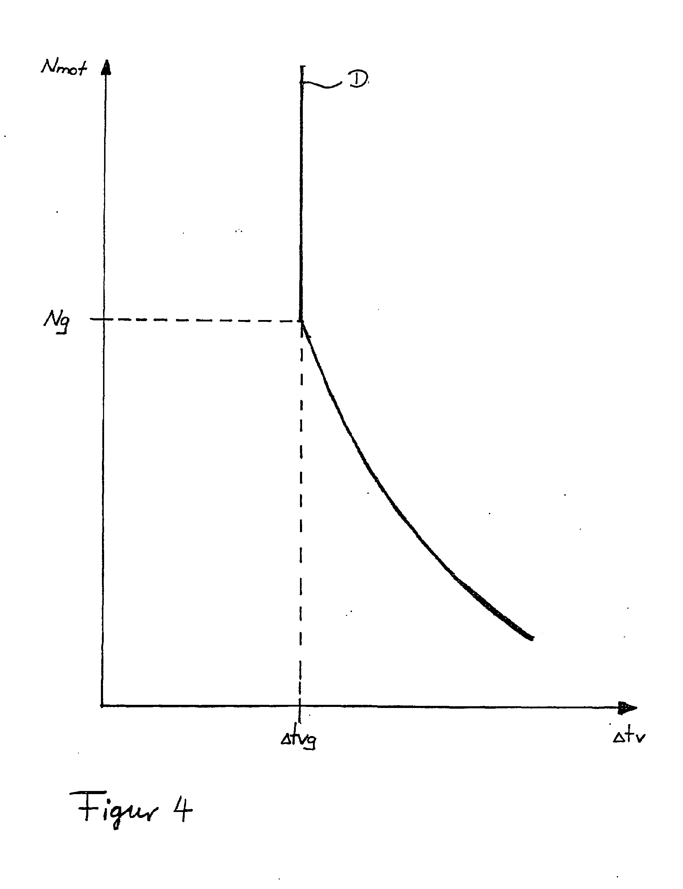

So ist der Dynamikeinfluss auf die Segmentzeit für einen positiven Motordrehzahlgradienten dahingehend zu berücksichtigen, dass insbesondere bei niedrigen Motordrehzahlen eine merkliche Reduzierung der ursprünglichen Segmentzeit, also der Segmentzeit ohne Dynamikeinfluss im Gegensatz zu der Segmentzeit in Folge Drehzahldynamik festzustellen ist. Um diese Verringerung des wirksamen Vorhalts bei hoher positiver Drehzahldynamik und bei niedrigen Motordrehzahlen entgegenzuwirken, wird der Vorhalt entsprechend Figur 4 erfindungsgemäß als Funktion der dynamischen Betriebsgröße insbesondere der Motordrehzahl geändert. Dieser Vorhalt, insbesondere die Vorhaltezeit kann ebenfalls bei Überschreiten einer Motordrehzahldynamik, beispielsweise eines Schwellenwertes verändert werden.

In Figur 4 ist dazu die Motordrehzahl Nmot über der Vorhaltezeitdauer Δtv im Rahmen einer Dynamikkurve D dargestellt. Dabei ist ein Grenzzeitvorhalt Δtvg berücksichtigt. Vorhaltedauern, die geringer sind als Δtvg können unter Umständen im Rahmen der vorhergehenden Toleranzbetrachtungen die Aktualität der Sensorinformationen zum jeweiligen Synchronisationspunkt nicht mehr gewährleisten.

Dieser Grenzzeitvorhalt entspricht einer Grenzdrehzahl Ng. Bei Drehzahlen größer der Grenzdrehzahl Ng wird der Zeitvorhalt aus vorgenannten Gründen konstant bei Δtvg gehalten. Bei Drehzahlen kleiner der Grenzdrehzahl Ng kann der Vorhalt bzw. die Vorhaltezeit Δtv angepasst werden, um der Verringerung der wirksamen Vorhaltezeit bei niedrigen Motordrehzahlen, also geringer Periodenzeitdauer entgegenzuwirken.

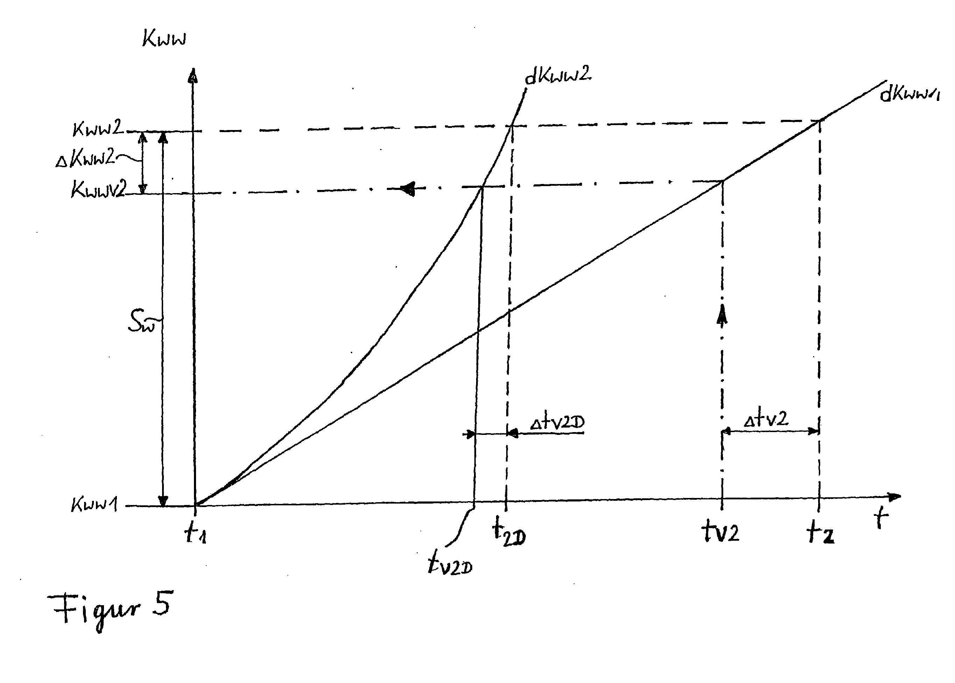

Zur Berücksichtigung des Dynamikeinflusses und zur Abbildung der Vorhaltepunkte tv1 und tv2 auf die Winkelebene ist in Figur 5 ein Vergleich der Kurbelwinkelverläufe (Kww über t) für konstante Motordrehzahlen dKww1 und für die Beschleunigung des Motors dKww2 dargestellt. Unter Berücksichtigung der Drehzahldynamik verschiebt sich der Synchronisationspunkt t2 auf den Dynamikpunkt t2D nach links. Dabei wird berücksichtigt, dass der ursprüngliche Zeitpunkt tv2 mit Vorhalt für die Anforderung zur Übertragung der Sensorbotschaft, also das Softwaretriggersignal STS rechts von t2D liegt, also dass bei Vorhandensein einer Motordrehzahldynamik die Sensorbotschaft erst angefordert wird, wenn der jetzige Synchronisationspunkt t2D bereits abgelaufen ist.

Wird der Zeitvorhalt Δtv2 zum Zeitpunkt t1 unter Berücksichtigung der Winkelgeschwindigkeit bei t1 in einen Winkelvorhalt ΔKww2 umgerechnet, so kann bei Erreichen des Kurbelwellenwinkels Kwwv2 im Rahmen des Vorhalts die Übertragungsanforderung zum Zeitpunkt tv2D, also dem Vorhaltezeitpunkt unter Dynamikberücksichtigung, gestartet werden. Auf diese Weise erfolgt die Anforderung zur Übertragung der Sensorbotschaft, also die Übermittlung des Softwaretriggersignals STS immer zeitlich vor Erreichen des Synchronisationspunktes. In dem Fall also um die Zeitdauer Δtv2D vor dem Synchronisationspunkt t2D. In Figur 5 entspricht dabei t1 dem Kurbelwellenwinkel Kww1. Das hier in Figur 5 betrachtete Segment übertragen auf den Kurbelwellenwinkel, also Segment Sw, reicht somit von Kww1 bis Kww2.

Durch die Übertragung auf den Winkel, insbesondere den Kurbelwellenwinkel ergibt sich nun der Vorteil, dass die Betriebsgröße, hier die Motordrehzahl nur zum Synchronisationspunkt berechnet werden muss. Dies liegt darin begründet, dass der aktuelle Kurbelwellenwinkel beim Motorsteuergerät ohnehin vorliegt, d. h. bei Erreichen des Winkels Kwwv2 kann die Anforderung zur Übertragung der Sensorbotschaft, also das Softwaretriggersignal STS an den Sensor erfolgen. Durch diese Beschränkung der Motordrehzahlberechnung auf die Synchronisationspunkte kann erheblich Rechenleistung und Rechenzeit im Motorsteuergerät eingespart werden.

In Folge der Drehzahldynamik verringert sich der Zeitvorhalt Δtv2 auf den Zeitvorhalt Δtv2D, also den Zeitvorhalt unter Dynamikeinfluss. Die Übertragungszeiten gemäß der Erläuterungen zu Figur 2 und Figur 3 müssen ebenfalls innerhalb der neuen Vorhaltezeit Δtv2D liegen. In Figur 5 stellt dKww1 die Funktion zur Änderung des Kurbelwellenwinkels bei konstanter Motordrehzahl dar und dKww2 die Funktion zur Änderung des Kurbelwellenwinkels bei Beschleunigung des Motors.

Um die Aktualität des Softwaretriggersignals STS sicherzustellen, müssen die Softwaretriggersignale eine hohe, insbesondere die höchste Priorität im Bussystem besitzen. Sinnvoll ist dabei ebenfalls das zu übertragende Sensorsignal, also die Sensorinformationen mit einer hohen Priorität auszustatten.

Im Rahmen einer vorteilhaften Ausgestaltung der vorliegenden Erfindung ist eine leitungslose Verbindung zwischen Sensoren und der Steuereinheit, insbesondere im Rahmen eines Funk-Bus-Systems, vorgesehen. Im Rahmen der Erfindung ist mit Bussystemen somit eine Übertragung bidirektionaler Art zwischen wenigstens zwei Teilnehmern vorgesehen, welche festen Regeln, also einem Busprotokoll folgt. Dabei ist unter Bussystem ebenso die leitungsgebundene wie die leitungslose Übertragung gemäß der Erfindung zu verstehen. Eine leitungslose Busübertragung kann beispielsweise an einem für die Leitungsverlegung ungünstigen Bereich, wie beispielsweise im Abgasstrang, vorteilhaft sein. Damit fallen zusätzliche Leitungsverbindungen, beispielsweise auch ein leitungsbehaftetes Bussystem weg, wodurch zusätzlich Gewicht und Kosten eingespart werden können. Außerdem ist so eine noch flexiblere Nachrüstung der Sensoren auch gegenüber einer physikalischen Schnittstelle eines leitungsgebundenen Bussystems möglich.

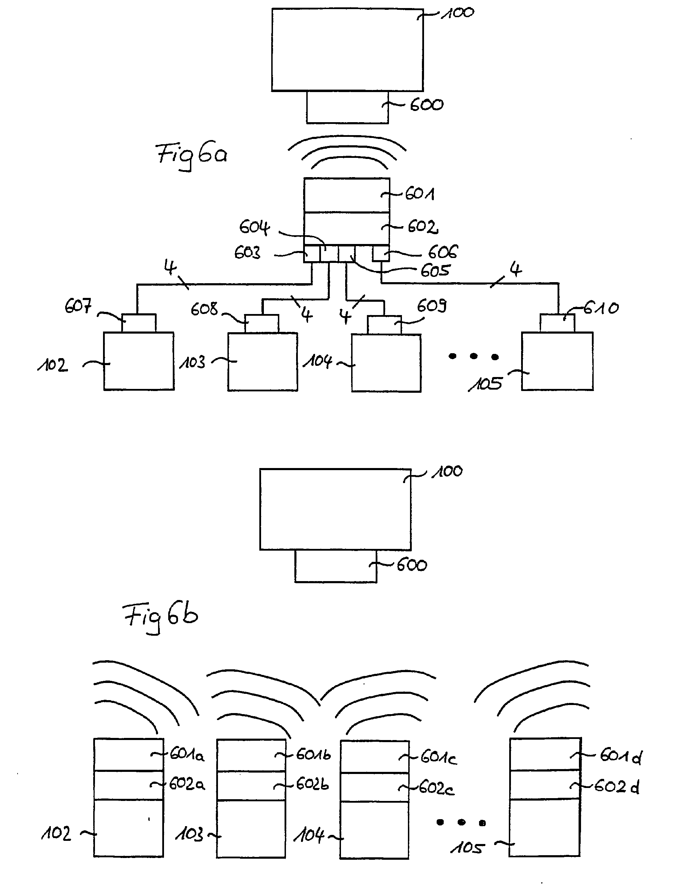

Figur 6, bestehend aus Figur 6a und 6b zeigt dazu beispielhaft zwei herausgegriffene Möglichkeiten der Sensorsteuereinheitverkopplung, wie hier ein leitungsloses Bussystem, beispielsweise als Funkbus. Dabei sind in Figur 6a die Sensoren 1 bis n, also 102 bis 105, beispielsweise Lambdasensorik, ein HFM- oder NOX-Sensor mit einer zentralen Auswerteelektronik 602 über die sensorseitigen Verbindungseinheiten 607 bis 610 und die auswerteelektronikseitigen Verbindungseinheiten 603 bis 606 verbunden. Dieser Auswerteelektronik 602 ist ein Sende- und Empfangsbaustein 601 zugeordnet. An der Steuereinheit, insbesondere im Motorsteuergerät 100 ist ebenfalls ein solcher Sende- und Empfangsbaustein 600 angebracht. Damit ist eine leitungslose Datenübertragung zwischen Zentralelektronik, also der Auswerteelektronik 602 auf der Sensorseite und der Steuereinheit 100 möglich.

In diesem Beispiel sind die Sensoren 102 bis 105 konventionell, beispielsweise über Leitungsbündel mit vier Leitungen mit der Auswerteelektronik verbunden. Ebenso kann hier anstelle, wie vorher dargestellt, ein Bussystem leitungsgebunden oder leitungslos die Sensoren mit der Auswerteelektronik und dem Sende-/Empfangsteil verkoppeln. Bei der leitungslosen Datenübertragung kann es sich um eine Funkübertragung, eine optische Übertragung oder eine beliebig andere leitungslose Datenübertragung beliebiger Wellenlänge oder Frequenz handeln. Das Sende- und Empfangsmodul 600 auf der Steuergeräteseite kann dabei direkt am oder im Steuergerät an- bzw. untergebracht sein. Eine Leitungsverbindung zwischen Steuergerät und Sende-Empfangsmodul 600 ist aber ebenso denkbar. An der hier dargestellten zentralen Auswerteeelktronik 602 findet eine Vorverarbeitung bzw. Auswertung der in den Sensoren 1 bis n, 102 bis 105, gemessenen Sensorsignale statt. Im Rahmen der Erfindung kann die Zentralelektronik z. B. zur Auswertung der Sensoren des Abgasstranges dienen.

In Figur 6b verfügen sämtliche Sensoren 1 bis n, also 102 bis 105 über eine eigene Auswerteelektronik 602a, 602b, 602c bzw. 602d vor Ort einschließlich eines Sende- und Empfangsmoduls 601a, 601b, 601c und 601d. Die Auswerteelektronik bzw. der Sender und Empfänger vor Ort bieten die Vorteile eines Sensorabgleichs, z. B. am Bandende und einer Diagnose vor Ort. Dabei sind die Sender möglicherweise aufgrund unterschiedlicher Frequenzen oder Sonstigem zu unterscheiden, um Kollisionen im Sende- und Empfangsbetrieb der einzelnen Sensoren bzw. der Steuereinheit zu vermeiden. Ein entsprechendes Busprotokoll kann dabei Gleiches leisten. Die dargestellten Anordnungen zur leitungslosen Datenübertragung greifen dann auf den vorher dargestellten Synchronisationsmechanismus zurück.

## Patentansprüche

1. Verfahren zur Steuerung von Zündung und/oder Einspritzung in einem Kraftfahrzeug, wobei wenigstens ein Sensor mit einer Verbindungseinheit über ein Bussystem mit wenigstens einem Motorsteuergerät zur Steuerung der Zündung und/oder der Einspritzung verbunden ist, wobei das Motorsteuergerät ebenfalls eine Verbindungseinheit aufweist, und wobei Sensorinformationen zu dem Motorsteuergerät übertragen werden, **dadurch gekennzeichnet,**
- **dass** das Motorsteuergerät ein Triggersignal über das Bussystem an den Sensor mit einem variabel wählbaren Kurbelwellenwinkel oder Zeit-Vorhalt übermittelt, wobei durch den Kurbelwellenwinkel- oder Zeit-Vorhalt Zeitfenster für eine Übertragung der Sensorinformationen vorgegeben werden,
- **dass** der Kurbelwellenwinkel- oder Zeit-Vorhalt von dem Motorsteuergerät jeweils abhängig von einer Motordrehzahl und/oder einer Motordrehzahldynamik vorgegeben und/oder angepasst wird,
- **dass** durch dieWahl des Kurbelwellenwinkel- oder Zeit-Vorhalts eine Synchronisation von dem Sensor und dem Motorsteuergerät so realisiert wird, dass die Sensorinformationen für das Motorsteuergerät zu einem vorgebbaren Zeitpunkt bzw. Kurbelwellenwinkel einlesbar und/oder verarbeitbar vorliegenwenn das Motorsteuergerät diese Sensorinformationen gerade einlesen und/oder verarbeiten muss, um eine Berechnung der Zündung und/oder der Einspritzung für jeden Zylinder durch-führen zu können.

2. Verfahren nach Anspruch 1, **dadurch gekennzeichnet, dass** der Sensor eine Vorverarbeitung der Sensorinformationen vornimmt, wobei der Vorhalt entsprechend der zur Vorverarbeitung der Sensorinformationen benötigten Zeit angepasst wird.

3. Verfahren nach Anspruch 1, **dadurch gekennzeichnet, dass** der Vorhalt abhängig von wenigstens einem der folgenden Einflüsse vorgegeben und/oder angepasst wird:
- eine Übertragungszeit von der Verarbeitungseinheit des Motorsteuergeräts zu dessen Verbindungseinheit,
- eine Übertragungszeit einer bereits zu übertragenden Busbotschaft,
- eine Übertragungszeit des Triggersignals via Bussystem,
- eine Übertragungszeit von der Verbindungseinheit des Sensors zu dessen Verarbeitungseinheit,
- eine Verarbeitungszeit bis zum Beenden der Verarbeitung der Sensorinformationen durch die Verarbeitungseinheit im Sensor und/oder
- eine Übertragungszeit der Sensorinformationen vom Sensor zum Motorsteuergerät.

4. Verfahren nach Anspruch 1, **dadurch gekennzeichnet, dass** verschiedene Prioritäten für das Bussystem vorgesehen sind, wobei das Triggersignal die höchste Priorität aufweist.

5. Verfahren nach Anspruch 1, **dadurch gekennzeichnet, dass** die Sensorinformationen und das Triggersignal leitungslos zwischen der Verbindungseinheit des Sensors und der Verbindungseinheit des Motorsteuergeräts übertragen werden, wobei die Verbindungseinheiten als Sender- und Empfängereinheiten ausgebildet sind.

6. Vorrichtung zur Steuerung von Zündung und/oder Einspritzung in einem Kraftfahrzeug, wobei wenigstens ein Sensor mit einer Verbindungseinheit über ein Bussystem mit wenigstens einem Motorsteuergerät zur Steuerung der Zündung und/oder der Einspritzung verbunden ist, wobei das Motorsteuergerät ebenfalls eine Verbindungseinheit aufweist, und wobei Sensorinformationen zu dem Motorsteuergerät übertragen werden, **dadurch gekennzeichnet,**
- **dass** das Motorsteuergerät Mittel aufweist, ein Triggersignal über das Bussystem an den Sensor mit einem variabel wählbaren Kurbelwellenwinkel- oder Zeit-Vorhalt zu übermitteln, wobei durch den Kurbelwellenwinkel- ader Zeit-Vorhalt Zeitfenster für eine Übertragung der Sensorinformationen vorgegeben werden,
- **dass** das Motorsteuergerät Mittel aufweist, den Kurbelwellenwinkel- oder ZeitVorhalt jeweils abhängig von einer Motordrehzahl und/oder einer Motordrehzahldynamik vorzugeben und/oder anzupassen,
- **dass** das Motorsteuergerät Mittel aufweist, durch die Wahl des Kurbelwellenwinkel-oder Zeit-Vorhalts eine Synchronisation von dem Sensor und dem Motorsteuergerät so zu realisieren, dass die Sensorinformationen für das Motorsteuergerät zu einem vorgebbaren Zeitpunkt bzw. Kurbelwellenwinkel einlesbar und/oder verarbeitbar vorliegen, wenn das Motorsteuergerät diese Sensorinformationen gerade einlesen und/oder verarbeiten muss, um eine Berechnung der Zündung und/oder der Einspritzung für jeden Zylinder durchführen zu können.

7. Vorrichtung nach Anspruch 6, **dadurch gekennzeichnet, dass** die Verbindungseinheiten als Sender- und Empfängereinheit ausgebildet sind und die Übertragung des Triggersignals und der Sensorinformationen leitungslos, insbesondere über ein Funk-Bus-System erfolgt.

8. Vorrichtung nach Anspruch 6, **dadurch gekennzeichnet, dass** die Vorrichtung im Rahmen eines Abgasstranges eines Fahrzeugs Verwendung findet, wobei der wenigstens eine Sensor einem Lambdasensor oder einem Heißfilmluftmassenmesser entspricht.

## Claims

1. Method for controlling the ignition and/or injection in a motor vehicle, wherein at least one sensor is connected by means of a connecting unit via a bus system to at least one engine control device for controlling the ignition and/or the injection, wherein the engine control device also has a connecting unit, and wherein sensor information is transmitted to the engine control device, **characterized**
- **in that** the engine control device transmits a trigger signal via the bus system to the sensor with a variably selectable crankshaft angle reserve or time reserve, wherein time windows for transmission of the sensor information are predefined by the crankshaft angle reserve or time reserve,
- **in that** the crankshaft angle reserve or time reserve is predefined and/or adapted by the engine control device in each case as a function of an engine speed and/or an engine speed dynamic,
- **in that** synchronization of the sensor and the engine control device is implemented by means of the selection of the crankshaft angle reserve or time reserve in such a way that the sensor information for the engine control device is present in such a form that it can be read in and/or processed at a predefinable time or crankshaft angle if the engine control device has to currently read in and/or process this sensor information in order to be able to calculate the ignition and/or the injection for each cylinder.

2. Method according to Claim 1, **characterized in that** the sensor performs pre-processing of the sensor information, wherein the reserve is adapted in accordance with the time required for pre-processing of the sensor information.

3. Method according to Claim 1, **characterized in that** the reserve is predefined and/or adapted as a function of at least one of the following influences:
- a transmission time from the processing unit of the engine control device to its connecting unit,
- a transmission time of a bus message which already has to be transmitted,
- a transmission time of the trigger signal via the bus system,
- a transmission time from the connecting unit of the sensor to its processing unit,
- a processing time up to the end of the processing of the sensor information by the processing unit in the sensor and/or
- a transmission time of the sensor information from the sensor to the engine control device.

4. Method according to Claim 1, **characterized in that** various priorities are provided for the bus system, wherein the trigger signal has the highest priority.

5. Method according to Claim 1, **characterized in that** the sensor information and the trigger signal are transmitted in a wireless fashion between the connecting unit of the sensor and the connecting unit of the engine control device, wherein the connecting units are embodied as transceiver units.

6. Apparatus for controlling the ignition and/or injection in a motor vehicle, wherein at least one sensor is connected by means of a connecting unit via a bus system to at least one engine control device for controlling the ignition and/or the injection, wherein the engine control device also has a connecting unit, and wherein sensor information is transmitted to the engine control device, **characterized**
- **in that** the engine control device has means for transmitting a trigger signal via the bus system to the sensor with a variably selectable crankshaft angle reserve or time reserve, wherein time windows for transmission of the sensor information are predefined by means of the crankshaft angle reserve or time reserve,
- **in that** the engine control device has means for predefining and/or adapting the crankshaft angle reserve or time reserve in each case as a function of an engine speed and/or an engine speed dynamic,
- **in that** the engine control device has means for implementing synchronization of the sensor and the engine control device by means of the selection of the crankshaft angle reserve or time reserve in such a way that the sensor information for the engine control device is present in such a form that it can be read in and/or processed at a predefinable time or crankshaft angle if the engine control device has to currently read and/or process this sensor information in order to be able to carry out a calculation of the ignition and/or of the injection for each cylinder.

7. Apparatus according to Claim 6, **characterized in that** the connecting units are embodied as a transceiver unit and the transmission of the trigger signal and of the sensor information is carried out in a wireless fashion, in particular over a radio bus system.

8. Apparatus according to Claim 6, **characterized in that** the apparatus is used within the scope of an exhaust section of a vehicle, wherein the at least one sensor corresponds to a lambda sensor or to a hot-film air mass flow rate meter.

## Revendications

1. Procédé de commande de l'allumage et/ou de l'injection dans un véhicule automobile, au moins un capteur muni d'une unité de connexion étant relié par le biais d'un système de bus avec au moins un module de commande de moteur pour commander l'allumage et/ou l'injection, le module de commande de moteur présentant lui aussi une unité de connexion et les informations de capteur étant transmises au module de commande de moteur, **caractérisé en ce que** le module de commande de moteur transmet un signal de déclenchement au capteur par le biais du système de bus avec une dérivée de l'angle de vilebrequin ou du temps à sélection variable, la dérivée de l'angle de vilebrequin ou du temps prédéfinissant des créneaux temporels pour une transmission des informations de capteur, que la dérivée de l'angle de vilebrequin ou du temps est à chaque fois prédéfinie et/ou adaptée en fonction d'une vitesse de rotation du moteur et/ou d'une dynamique de la vitesse de rotation du moteur, que la sélection de la dérivée de l'angle de vilebrequin ou du temps réalise une synchronisation du capteur et du module de commande de moteur de telle sorte que les informations de capteur pour le module de commande de moteur sont présentes pour être lues et/ou traitées à un instant ou à un angle de vilebrequin qui peut être prédéfini, lorsque le module de commande de moteur doit lire et/ou traiter ces informations de capteur pour pouvoir effectuer un calcul de l'allumage et/ou de l'injection pour chaque cylindre.

2. Procédé selon la revendication 1, **caractérisé en ce que** le capteur effectue un prétraitement des informations de capteur, la dérivée étant adaptée en fonction du temps nécessaire pour le prétraitement des informations de capteur.

3. Procédé selon la revendication 1, **caractérisé en ce que** la dérivée est prédéfinie et/ou adaptée en fonction d'au moins l'une des influences suivantes :
- un temps de transmission de l'unité de traitement du module de commande de moteur vers son unité de connexion,
- un temps de transmission d'un message du bus déjà à traiter,
- un temps de transmission du signal de déclenchement par le biais du système de bus,
- un temps de transmission de l'unité de connexion du capteur à son unité de traitement,
- un temps de traitement jusqu'à la fin du traitement des informations de capteur par l'unité de traitement dans le capteur et/ou
- un temps de transmission des informations de capteur du capteur au module de commande de moteur.

4. Procédé selon la revendication 1, **caractérisé en ce que** différentes priorités sont prévues pour le système de bus, le signal de déclenchement présentant la priorité la plus élevée.

5. Procédé selon la revendication 1, **caractérisé en ce que** les informations de capteur et le signal de déclenchement sont transmis sans fil entre l'unité de connexion du capteur et l'unité de connexion du module de commande de moteur, les unités de connexion étant réalisées sous la forme d'unités d'émission et de réception.

6. Dispositif de commande de l'allumage et/ou de l'injection dans un véhicule automobile, au moins un capteur muni d'une unité de connexion étant relié par le biais d'un système de bus avec au moins un module de commande de moteur pour commander l'allumage et/ou l'injection, le module de commande de moteur présentant lui aussi une unité de connexion et les informations de capteur étant transmises au module de commande de moteur, **caractérisé en ce que** le module de commande de moteur présente des moyens pour transmettre un signal de déclenchement au capteur par le biais du système de bus avec une dérivée de l'angle de vilebrequin ou du temps à sélection variable, la dérivée de l'angle de vilebrequin ou du temps prédéfinissant des créneaux temporels pour une transmission des informations de capteur, que le module de commande de moteur présente des moyens pour prédéfinir et/ou adapter la dérivée de l'angle de vilebrequin ou du temps à chaque fois en fonction d'une vitesse de rotation du moteur et/ou d'une dynamique de la vitesse de rotation du moteur, que le module de commande de moteur présente des moyens pour réaliser une synchronisation du capteur et du module de commande de moteur par la sélection de la dérivée de l'angle de vilebrequin ou du temps de telle sorte que les informations de capteur pour le module de commande de moteur sont présentes pour être lues et/ou traitées à un instant ou à un angle de vilebrequin qui peut être prédéfini, lorsque le module de commande de moteur doit lire et/ou traiter ces informations de capteur pour pouvoir effectuer un calcul de l'allumage et/ou de l'injection pour chaque cylindre.

7. Dispositif selon la revendication 6,
**caractérisé en ce que** les unités de connexion sont réalisées sous la forme d'unités d'émission et de réception et la transmission du signal de déclenchement et des informations de capteur s'effectue sans fil, notamment par le biais d'un système de bus radioélectrique.

8. Dispositif selon la revendication 6,
**caractérisé en ce que** le dispositif est utilisé dans le cadre d'une chaîne d'échappement d'un véhicule, l'au moins un capteur correspondant à un capteur lambda ou un débitmètre massique d'air à film chaud.
